# NEW EUROPEAN PATENT SPECIFICATION

(11) **EP 2 726 558 B2**
(45) Date of publication and mention of the opposition decision: **20.11.2019**
(45) Mention of the grant of the patent: 08.03.2017
(21) Application number: 12805023.4
(22) Date of filing: 29.06.2012
(51) Int. Cl.: C09D 5/16, C09D 183/12

(54) **FOULING CONTROL COATING COMPOSITIONS COMPRISING POLYSILOXANE AND PENDANT HYDROPHILIC OLIGOMER/POLYMER MOIETIES**
BESCHICHTUNGSZUSAMMENSETZUNGEN ZUM SCHUTZ VOR VERSCHMUTZUNG MIT POLYSILOXAN UND HÄNGENDEN HYDROPHILEN OLIGOMER-/POLYMERTEILEN
COMPOSITION DE REVÊTEMENT ANTI-SALISSURES COMPRENANT DES FRACTIONS POLYSILOXANES ET OLIGOMÈRES/POLYMÈRES HYDROPHILES PENDANTES

(30) Priority: 30.06.2011 EP 11172169; 30.06.2011 EP 11172166; 30.06.2011 EP 11172163
(43) Date of publication of application: 07.05.2014
(73) Proprietor: Hempel A/S, 2800 Kongens Lyngby (DK)
(72) Inventor: THORLAKSEN, Peter Christian Weinrich, DK-2680 Solrød Strand (DK)
(74) Representative: Plougmann Vingtoft a/s
(86) International application number: PCT/DK2012/050227
(87) International publication number: WO 2013/000478

(56) References cited:
- EP-A1- 1 867 401
- EP-A1- 2 143 766
- WO-A1-93/13179
- WO-A1-95/32862
- WO-A1-95/32862
- WO-A1-2006/002630
- WO-A1-2006/121937
- WO-A1-2008/132195
- WO-A1-2011/069111
- WO-A1-2011/076856
- JP-A- H11 269 409
- US-A- 5 919 689
- US-A- 6 107 381
- US-A1- 2008 166 493
- US-A1- 2009 270 548
- US-A1- 2010 062 200
- US-B2- 6 559 201
- KIM YOUNG DUK ET AL: "Siloxane-based biocatalytic films and paints for use as reactive coatings", BIOTECHNOLOGY AND BIOENGINEERING, WILEY & SONS, HOBOKEN, NJ, US, vol. 72, no. 4, 20 February 2001 (2001-02-20), pages 475-482, XP002535934, ISSN: 0006-3592
- DATABASE WPI Week 200682 22 April 2005 (2005-04-22) Thomson Scientific, London, GB; AN 2006-806651 XP002658933, & JP 2006 299132 A (KANSAI PAINT CO LTD) 2 November 2006 (2006-11-02)
- BROOK: "Silicon in Organic, Organometallic, and Polymer Chemistry", 2000 page 40,
- PACHALY ET AL: "WACKER SILICONES", 2005
- Wikipedia entry for silicone resins
- International Standard (ISO) 12944-5, 2nd edition 15.9.2007, pgs 1-7
- Wacker Silicones Processing RTV-2 Silicone Rubbers, June 2006

## Description

### FIELD OF THE INVENTION

The present invention relates to novel fouling control coating compositions.

### BACKGROUND OF THE INVENTION

Traditionally, silicone formulations rely on physical means, this being mainly a factor of modulus of elasticity and surface tension to create a low bio-fouling surface. The traditional polydimethylsiloxane (PDMS) coatings have shown difficulty in resisting bio-fouling over time, thus decreasing the advantage of drag reduction.

Hence, there is a need for improved fouling control polysiloxane-based coating compositions.

WO 2007/053163 discloses an antifouling material that may include one or more of a number of suitable copolymers (e.g. block copolymers, graft copolymers, etc.) which provide biocidal and/or fouling release characteristics. The copolymers may include a polysiloxane backbone with one or more polymers grafted onto the polysiloxane backbone. Such grafted polymers may carry biocidal groups.

WO 2008/132195 discloses an antifouling coating composition comprising a curable polymer (e.g. an organosiloxane-containing polymer) and an organosilicone polymer.

WO 2008/132196 discloses a method to physically deter marine fouling which method involves forming on the substrate a coating composition comprising curable polyorganosiloxane, polyoxyalkylene block copolymer, organosilicon cross-linking agent and/or catalyst. The polyoxyalkylene is reacted to the silicone binder by addition reaction (vinyl/hydride) to form a block copolymer of polyoxyalkylene and polysiloxane. The copolymer can subsequently be terminated with vinyltrimethoxysilane to form a moisture curable binder.

US 2004/006190 discloses a room-temperature curable organopolysiloxane composition, which includes (A) an organopolysiloxane with the terminals blocked with a hydroxyl group, a hydrolysable group, or both these types of groups, and (B) an organosilicon compound containing a hydrolysable group, a partial hydrolysis-condensation product thereof, or a mixture of the two, and (C) a polysiloxane with at least one oxyalkylene group bonded to a silicon atom via, for example, a C-C-Si linkage.

US 6,313,193 B1 i.a. discloses a composition comprising a silanol-terminated polydimethyl siloxane, a dimethylethoxy-terminated polydimethyl siloxane, polydiethoxy siloxane, and benzalkonium chloride. The polydiethoxy siloxane reacts with the polydimethyl siloxanes so that the polydiethoxy siloxane becomes an integral part of the binder network.

JP 2006 299132 A discloses an antifouling coating composition which is based on a vinyl copolymer binder system which include polysiloxane side chains, and which is modified with certain reactive silanes, and which further comprises, e.g., an poly(oxyalkylene)-modified polysiloxane. The composition may also include an antifouling agent.

WO 2008/013825 A2 discloses a composition comprising a polysiloxane grafted with mainly hydrophobic polymers.

EP 1990366 A1 and EP 1867401 A1 discloses curable polysiloxane coating compositions comprising hydrolysable alkoxy groups (e.g. methoxyethoxy and ethoxyethoxy groups).

The silicone based fouling release coatings have demonstrated an advantage over conventional antifouling coatings showing significant lower drag resistance, hence reduced fuel consumption of marine vessels. The difference is especially obvious as long as the silicone coating is free from marine fouling including slime fouling. Many conventional silicone coatings have until now only been able to maintain a bio-fouling free surface for a shorter period.

A few biocide containing antifouling coatings have demonstrated a greater resistance towards bio-fouling compared to the silicone based fouling release coatings under e.g. static conditions. The surface characteristics of such a coating will however lead to an increased drag resistance compared to silicone coatings even when the surface is fouling free.

The rationale behind the present invention has been to prolong the bio-fouling free period of a silicone based coating by utilizing curable polysiloxanes having pendant hydrophilic moieties. This provides a coating with low drag resistance that will remain fouling free for a longer time than conventional silicone based fouling release coatings.

### SUMMARY OF THE INVENTION

The present inventors have now developed paint compositions for preparing new fouling control coatings (i.e. a cured paint coat) comprising a polysiloxane-based binder matrix having included as a part thereof pendant hydrophilic oligomer/polymer moieties, which matrix provides a coating with low drag resistance.

The coating may further comprise one or more biocides. In this way, the advantages of silicone fouling release are combined with those of traditional anti-fouling coatings, thus gaining a foul-free, low-friction surface with the use of a relatively small amount of biocide.

The present inventors have realised that the use of a polysiloxane-based binder system having included as a part thereof hydrophilic oligomer/polymer moieties, in particular poly(oxyalkylene) moieties, (see further below) renders it possible to obtain a media for water- and biocidal transport through the cured polysiloxane matrix film. The leach rate of the biocide can be controlled amongst others by the amount and the hydrophilicity of the hydrophilic oligomer/polymer moieties.

So, in a first aspect, the invention relates to a cured fouling control paint coat comprising a polysiloxane-based binder matrix, said binder matrix having included as a part thereof pendant hydrophilic oligomer/polymer moieties of non-silicon origin, wherein said hydrophilic oligomer/polymer moieties are attached to the polysiloxane backbone at a non-terminal position, and said hydrophilic oligomer/polymer moieties are devoid of any bonds which are hydrolysable in sea-water, wherein more than 50 % by weight of the binder matrix is represented by polysiloxane parts, and wherein said polysiloxane is derived from a functional organopolysiloxane with terminal functionality.

In a second aspect the present invention relates to a fouling control coating composition comprising a polysiloxane-based binder system, said binder system comprising one or more reactive polysiloxane components modified with pendant hydrophilic oligomer/polymer moieties of non-silicon origin, wherein said hydrophilic oligomer/polymer moieties are attached to the polysiloxane backbone at a non-terminal position, and said hydrophilic oligomer/polymer moieties are devoid of any bonds which are hydrolysable in sea-water, and wherein said reactive polysiloxane is a functional organopolysiloxane with terminal functionality.

In a third aspect, the invention relates to the use of a reactive polysiloxane component having pendant hydrophilic oligomer/polymer moieties of non-silicon origin for improving the antifouling properties of a polysiloxane based coating composition, wherein said hydrophilic oligomer/polymer moieties are attached to the polysiloxane backbone at a non-terminal position, and said hydrophilic oligomer/polymer moieties being devoid of any bonds which are hydrolysable in sea-water, and wherein said reactive polysiloxane is a functional organopolysiloxane with terminal functionality.

### DETAILED DISCLOSURE OF THE INVENTION

### The cured paint coat

As mentioned above, the present invention provides a cured paint coat comprising a polysiloxane-based binder matrix, said binder matrix having included as a part thereof pendant hydrophilic oligomer/polymer moieties. In one embodiment, the paint coat further comprises one or more biocides, in particular such that the weight ratio between the hydrophilic oligomer/polymer moieties and the one or more biocides is in the range 1:0.02 to 1:20.

The expression "pendant" means that the hydrophilic oligomer/polymer moieties are attached to the polysiloxane backbone at a non-terminal position and that such moieties are attached at only the one end so that the pendant hydrophilic oligomer/polymer forms a "graft" to the polysiloxane backbone (matrix).

Pendant hydrophilic oligomers/polymer moieties may in principle carry functional (non-reactive) groups at the free end, e.g. groups exhibiting a biocidal effect, etc. However, in most embodiments, the hydrophilic oligomers/polymer moieties are not carrying such functional groups, but are in the form of the native oligomer/polymer form, possibly endcapped, like with an alkyl group, or possibly with a hydroxyl group or methoxy terminated.

The paint coat is preferably used as the top coat in a coating system comprising two or more paint coat layers (e.g. at least a primer coat and a tie coat in addition to the top coat).

Without being bound to any particular theory, it is believed that the function of the polysiloxane-based binder matrix rendered hydrophilic by means of oligomer/polymer moieties is to provide a coating with low fouling tendency and low drag resistance. Insofar the coating further comprises a biocide, it is believed that the function of the polysiloxane-based binder matrix is further to facilitate the transport and accessibility of the biocide at the surface upon contact with sea-water. Potentially, a hydrated layer formed at the coating-water interphase will also aid in retaining the biocide at the surface, hence allowing the coating to exert its fouling deterrent activity for extended exposure intervals.

It should be understood that the hydrophilic oligomer/polymer moieties forms a part of the polysiloxane-based binder matrix, i.e. that the moieties are covalently incorporated into the binder matrix as being pendant to the polysiloxane backbone. It should also be understood that the formed covalent bond(s) preferably are non-hydrolysable.

The polysiloxane-based binder matrix typically constitutes at least 40 % by dry weight, such as 40-98 % by dry weight, or 45-95 % by dry weight, or 50-95 % by dry weight, in particular 50-90 % by dry weight, or 55-90 % by dry weight, or 60-90 % by dry weight, or 60-80 % by dry weight, of the cured paint coat.

The term "polysiloxane-based binder matrix" is intended to mean that the binder matrix mainly consists of polysiloxane parts, i.e. that more than 50 % by weight, preferably more than 60 % by weight, e.g. more than 70 % by weight, of the binder matrix is represented by polysiloxane parts. Preferably the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder matrix (i.e. the binder components and any cross-linkers). The remainder of the binder matrix is preferably made of the hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder matrix.

It should of course be understood that the hydrophilic oligomer/polymer moieties which are included in the polysiloxane-based binder matrix are of non-silicon origin.

When calculating the amount of the polysiloxane parts and the hydrophilic oligomer/polymer moieties, respectively, for a given starting material (or an adduct), it is typically fairly straightforward to distinguish between the two. However, in order to eliminate any doubt about any linkers between the two, it should be understood that the hydrophilic oligomer/polymer moieties include all atoms up to, but not including, the silicon atom which is adjacent to the hydrophilic oligomer/polymer moiety. As an example, in a structure of the type [polysiloxane-O]-Si(Me)(-CH₂CH₂CH₂-[hydrophilic oligomer])-Si(Me)₂-[O-polysiloxane], the [polysiloxane-O]-Si(Me) and [polysiloxane-O]-Si(Me)₂ parts are accounted for as silicone parts, whereas the pendant -CH₂CH₂CH₂-[hydrophilic oligomer] moiety is accounted for as the hydrophilic oligomer moiety.

Suitable hydrophilic oligomer/polymer moieties are those selected from poly(vinyl pyrrolidone), poly[N-(2-hydroxypropyl)methacrylamide], poly(N,N- dimethacrylamide), poly(acrylic acid), poly(glycerol), polyHEMA, polysaccharides, poly(vinyl alcohol), polyketones, poly(aldehyde guluronate), polyvinylamine, poly(vinyl acetate), polyoxyalkylenes like poly(ethylene glycol), poly(propylene glycol), poly(2-methyl-2-oxazoline), etc., including copolymers of the foregoing. Preferably the hydrophilicity is obtained by modification with polyoxyalkylene moieties like poly(ethylene glycol).

Incorporation of the above mentioned hydrophilic oligomer/polymer into the polysiloxane polymer backbone is typically done through a linking group. The linking group is understood as the product of the reaction of two mutually reaction functional groups; one functional group on the polysiloxane backbone and one on the hydrophilic oligomer/polymer. E.g. an amine linking group is result of for example - but not exclusively - the reaction of a glycidyl ether with a primary or secondary amine. Examples of useful linking groups between the hydrophilic oligomer/polymer and the polysiloxane backbone are: amine groups, ether groups, amide groups. 1,2,3-triazole, C-C bonds, C-C double bonds, C-C triple bonds, Si-C bonds, C-S bonds, S-S bonds, urethane group, urea groups. Most preferred linking group is the Si-C bond prepared by hydrosilylation reaction catalyzed by platinum where the functional group on the polysiloxane backbone is a hydride and the functional group on the hydrophilic oligomer/polymer is an allyl group.

The hydrophilic oligomer/polymer moieties are devoid of any bonds which are hydrolysable in sea-water. Hence, the hydrophilic oligomer/polymer moieties do not include ester bonds or acid anhydride bonds.

In the present context oligomer/polymer moieties are understood as those encompassing at least 3 repeating units, such as at least 5 repeating units. Typically, oligomer/polymer moieties used for modification include 3-1,000 repeating units, such as 3-200, or 5-150, or 5-100, or 10-80, or 5-20, repeating units.

In some preferred embodiments, the hydrophilic oligomer/polymer moieties (i.e. oligomeric or polymeric groups incorporated into the binder matrix) have a number average molecular weight (Mₙ) in the range of 100-50,000 g/mol, such as in the range of 100-30,000 g/mol, in particular in the range of 150-20,000 g/mol, or in the range of 200-10,000 g/mol.

In the present description with claims, the terms "hydrophilic oligomer/polymer moieties", "hydrophilic polymer moieties", and similar are intended to mean that the oligomeric or polymeric moieties, in themselves (i.e. when represented as discrete molecules) have a solubility of at least 1 %(w/w) in demineralized water at 25°C.

### Polysiloxane-based binder system

The cured paint coat of the invention is typically prepared from a binder system which - upon curing - forms a cross-linked polysiloxane-based binder matrix which incorporates biocide(s) as well as other constituents such as additives, pigments, fillers, etc. in the cured paint coat.

Hence, it should be understood that the polysiloxane-based binder matrix is made up of reactive polysiloxane binder components, e.g. functional organopolysiloxanes, cross-linkers, silicates (e.g. ethyl silicate), and the like. Thus, it is believed that the reaction between such components will result in the binder matrix in the form of a typically three-dimensional covalently interconnected network.

The cured paint coat may be formed in various ways, e.g. polymerization/cross-linking by formation of siloxane bonds through a condensation reaction or by the use of their reactive groups such as for example amine/epoxy, carbinol/isocyanate etc. Condensation reaction is preferred.

The polysiloxane based binder is a functional organopolysiloxane with terminal functionality. The functionality can either be hydrolysable groups, such as for example alkoxy groups, ketoxime groups or the functionality can be silanol groups. A minimum of two reactive groups per molecule is preferred. If the molecule contains only two reactive groups, for example silanol groups, it may be necessary to use an additional reactant, a cross-linker, to obtain the desired cross-link density. The cross-linker can for example be an alkoxy silane such as methyltrimethoxysilane, but a wide range of useful silanes are available as will be described further on. The silane can be used as it is or as hydrolysation-condensation products of same. Although condensation cure is much preferred, the functionality of the organopolysiloxane is not limited to a condensation cure. If so desired, other types of curing can be utilized, for example amine/epoxy either alone or in combination with a condensation reaction. In such cases, the organopolysiloxane can have terminal groups of epoxy or amine and pendant hydrolysable groups, for example with alkoxyfunctionality.

The polysiloxane-based binder system discussed above is characterized by having included therein, as a part of the binder matrix, one or more polysiloxane components which are modified with hydrophilic oligomer/polymer moieties. Hence, such polysiloxane components will upon reaction with other polysiloxane components and cross-linkers provide hydrophilic properties to the binder system. Alternatively, hydrophilic oligomer/polymer moieties functionalized with reactive silanes which enable them to react with the polysiloxane binder, or the hydrophilic oligomer/polymer moieties, and form a non-hydrolysable bond, may also be used.

The polysiloxane components must include silicon-reactive groups such as Si-OH groups, hydrolysable groups such as Si-OR (such as alkoxy, oxime, acetoxy etc.) groups, etc., so as to facilitate reaction with other constituents of the polysiloxane-based binder system.

In one currently preferred embodiment of the above, the hydrophilic oligomer/polymer moiety is a poly(oxyalkylene) moiety.

In some embodiments, the fouling control coating composition including the polysiloxane-based binder system may be a reaction-curable composition or a condensation-curable composition as will be evident for the person skilled in the art. Examples hereof are a two-component condensation curing composition based on a silanol-reactive polydiorganosiloxane and a silane with hydrolysable groups, or a one-component condensation-curable composition based on a polydiorganosiloxane with alkoxy or other hydrolysable reactivity. Another example is a reaction curable composition based on an epoxy-functional polysiloxane binder and an amine functional polysiloxane curing agent. Combinations of reaction-curable compositions and condensation-curable compositions are possible, if the binder or the curing agent (or both) includes condensation curable groups, such as alkoxy groups.

In one embodiment, the binder phase comprises (i) a binder and (ii) a cross-linking agent of which the binder (i) should include hydrolysable groups or other reactive groups so as to participate in the formation of the matrix.

The binder (i) typically constitutes 20-90 % by dry weight of the coating composition, and it should be understood, that the binder (i) may be of different types, e.g. two or more of the types described above, so that the binder (i) may, for example, comprise a non-modified curable polysiloxane and a curable polysiloxane which has been modified with hydrophilic moieties.

In one embodiment, the binder includes a curable diorganopolysiloxane represented by a general formula (1) shown below: 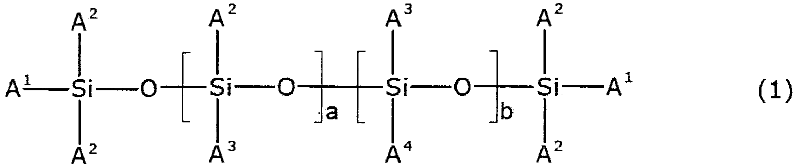 wherein each A¹ is independently selected from a hydroxyl group, a hydrolysable group and another functional group, such as amine or epoxy; each A² is independently selected from alkyl, aryl, alkenyl and a hydrolysable group; each A³ and A⁴ is independently selected from alkyl, aryl alkenyl and a hydrophilic group, such as a polyoxyalkylene group, wherein, if A³ and/or A⁴ is a hydrophilic group, such as a polyoxyalkylene group, such group may be attached to the silicon atom via a C₂₋₅-alkylene linker; a = 1-25,000, b = 1-2,500 and a+b is at least 5.

In one alternative embodiment, the binder includes a curable diorganopolysiloxane represented by a general formula (1x) shown below: 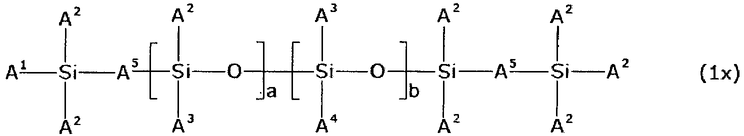 wherein each of A¹, A², A³, A⁴, a and b are as above for formula (1) and wherein each A⁵ is independently selected from oxygen or an alkyl group of 2-5 carbon atoms.

In another embodiment, the polysiloxane binder has hydrophilic oligomer/polymer moieties grafted as side chains (pendant hydrophilic groups), as depicted below, and can be prepared by a hydrosilylation reaction between a hydride functional polysiloxane and a hydrophilic component containing an unsaturated group (-CH=CH₂) such as for example an allyl or vinyl group, in presence of a hydrosilylation catalyst, such as platinum, in accordance with formula (1c), where the example of a hydrophilic compound is an allyl-terminated poly(ethylene glycol). The synthesis is carried out at elevated temperatures, such as 60-150°C. To render the polymer curable, it is necessary to functionalise it with a hydrolysable, or by other means reactive, group, such as vinyltrimethoxysilane. The reaction is following same principles as when grafting the hydrophilic compound to the polysiloxane, and it is outlined in formula (1b), and the functionalization may be done, but not necessarily, prior to the bonding of a hydrophilic group.

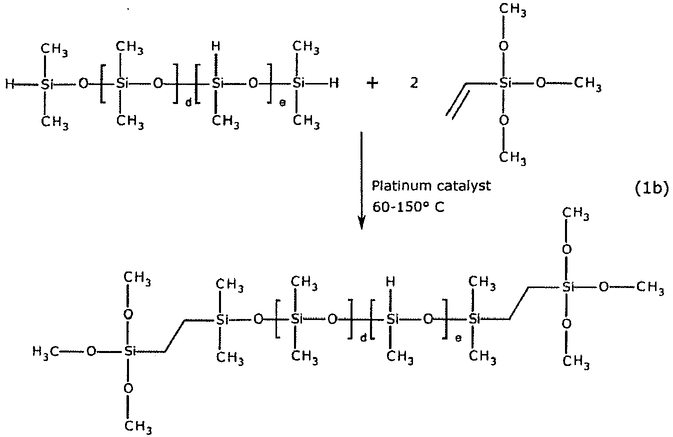

The resulting binder from the reaction (1b) is further modified with a hydrophilic component, for example poly(ethylene glycol) mono allyl ether as outlined in formula (1c) resulting in a curable, polysiloxane modified with hydrophilic oligomer/polymer moieties.

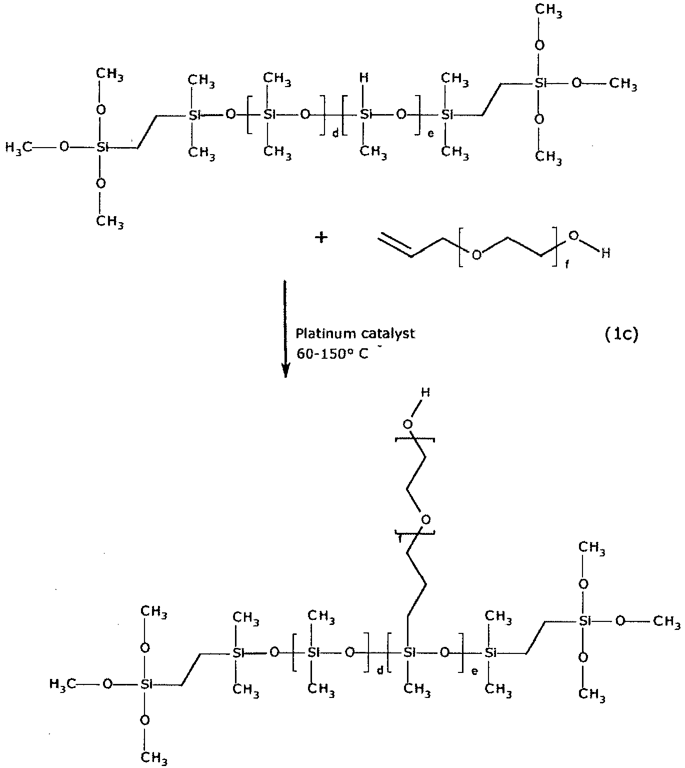

The binder obtained can be used as is, or in combination with a curable diorganosiloxane (of the generic type presented in formula (1)). As previously described, hydrophilic polymers other than poly(ethylene glycol) are also useful for rendering the polysiloxane hydrophilic.

It is possible to graft the hydrophilic pendant moieties to the polysiloxane prior to grafting the hydrolysable silane to the polysiloxane (i.e. in reverse order than the synthesis described in formulae (1b) and (1c).

The cross-linking agent (ii) preferably constitutes 0-10 % by dry weight of the coating composition and is, e.g., an organosilicon compound represented by the general formula (2) shown below, a partial hydrolysis-condensation product thereof, or a mixture of the two:

Rₐ-Si-X₄₋ₐ, (2)

wherein, each R represents, independently, an unsubstituted or substituted monovalent hydrocarbon group of 1 to 6 carbon atoms or a hydrolysable group, each X represents, independently, a hydrolysable group, and a represents an integer from 0 to 2, such as from 0 to 1.

The compound outlined in formula (2) acts as a cross-linker for the binder (i). The composition can be formulated as a one component curable RTV (room-temperature vulcanizable) by admixing the binder (i) and the cross-linking agent (ii). If the reactivity on the terminal Si-group of the binder (i) consist of readily hydrolysable groups, such as dimethoxy or trimethoxy, a separate cross-linker is usually not necessary to cure the film. The technology behind the curing mechanism and examples of cross-linkers is described in prior art (US 2004/006190).

In one embodiment, R represents a hydrophilic group such as a poly(oxyalkylene). In this case, it is preferred to have a C₂₋₅-alkyl spacer between the Si-atom and the polyoxyalkylene group. Hence, the organopolysiloxane may have oxyalkylene domains.

In one variant, the hydrophilicity may be added to the hydrophilicity which has been obtained by incorporating a hydrophilic group to binder (i) as outlined in previous section, by using a hydrophilic silane, such as the generic type expressed in formula (2a). The hydrophilic silane will react with the silanol or the hydrolysable groups in the binder component (formulae (1) or (1e)), and thereby incorporate a hydrophilic component. 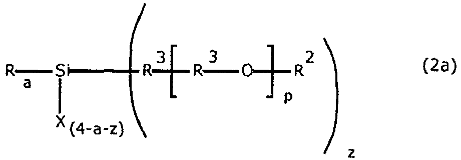 wherein, each R represents, independently, an unsubstituted or substituted monovalent hydrocarbon group of 1 to 6 carbon atoms or a hydrolysable group; each X represents, independently, a hydrolysable group; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-); p is 0-50; a is 0-2; z is 1-3.

Introducing oxyalkylene units in the organopolysiloxane will increase the hydrophilicity of the binder, especially when ethyleneoxide type -[CH₂CH₂-O]- is used.

Preferred cross-linkers are those selected from tetramethoxysilane, tetraethoxysilane; tetrapropoxysilane; tetra-*n*-butoxysilane; vinyltris(methylethyloximino)silane; vinyltris(acetoxime)silane; methyltris(methylethyloximino)silane; methyltris(acetoxime)silane; vinyltrimethoxysilane; methyltrimethoxysilane; vinyltris(isopropenoxy)silane; tatraacetoxysilane; methyltriacetoxysilane; ethyltriacetoxysilane; vinyltriacetoxysilane; di-*t-*butoxydiacetoxysilane: methyltris(ethyllactate)silane and vinyltris(ethyllactate)silane as well as hydrolysis-condensation products of the same.

Other interesting cross-linkers are those selected from vinyltriethoxysilane, methyltriethoxysilane, ethyltrimethoxysilane, ethyltrimethoxysilane, tetraisopropoxysilane, tetrabutoxysilane as well as hydrolysis-condensation products of the same.

In some interesting embodiments, the polysiloxane-based binder comprises a polydimethylsiloxane-based binder.

In other interesting embodiments, the binder may include fluoro-modifications, e.g. fluoroalkyl modified polysiloxane binders such as silanol-terminated poly(trifluoropropylmethylsiloxane).

The polysiloxane-based binder system typically constitutes at least 40 % by dry weight, such as 40-98 % by dry weight, or 45-95 % by dry weight, or 50-95 % by dry weight, in particular 50-90 % by dry weight, or 55-90 % by dry weight, or 60-90 % by dry weight, of the coating composition.

### Hydrophilic-modified polysiloxane oils

In some embodiments, the paint coat (and the coating composition) is devoid of any oils ("oil free").

However, in some other embodiments, may further include hydrophilic-modified polysiloxane oils, i.e. constituents which do not form covalent bonds to the polysiloxane-based binder matrix. Hydrophilic-modified polysiloxane oils are widely used as surfactants and emulsifiers due to the content of both hydrophilic and lipophilic groups in the same molecule. In contrast to the polysiloxane components discussed above, the hydrophilic-modified polysiloxane oils are selected so that they do not contain groups that can react with the binder (or binder components) or the cross-linker (if present), hence the hydrophilic-modified polysiloxane oils are intended to be non-reactive, in particular with respect to the binder components. In particular, the hydrophilic-modified polysiloxane oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

The non-reactive hydrophilic-modified polysiloxane oils are typically modified by the addition of non-ionic oligomeric or polymeric groups which can be polar and/or capable of hydrogen bonding, enhancing their interaction with polar solvents, in particular with water, or with other polar oligomeric or polymeric groups. Examples of these groups include, amides (e.g. poly(vinyl pyrrolidone), poly[N-(2-hydroxypropyl)methacrylamide]), poly(N,N-dimethacrylamide), acids (e.g. poly(acrylic acid)), alcohols (e.g. poly(glycerol), polyHEMA, polysaccharides, poly(vinyl alcohol)), ketones (polyketones), aldehydes (e.g. poly(aldehyde guluronate), amines (e.g. polyvinylamine), esters (e.g. polycaprolactones, poly(vinyl acetate)), ethers (e.g. polyoxyalkylenes like poly(ethylene glycol), poly(propylene glycol)), imides (e.g. poly(2-methyl-2-oxazoline)), etc., including copolymers of the foregoing. Preferably the hydrophilicity is obtained by modification with polyoxyalkylene groups.

As before, it should be understood that the hydrophilic oligomer/polymer moieties with which the polysiloxane oils are modified are of non-silicon origin. Preferably, the above-mentioned "oligomers" and "polymers" include at least 3 repeating units, such as at least 5 repeating units. In many interesting embodiments, the oligomers or polymers include 3-1,000 repeating units, such as 3-200, or 5-150, or 5-100 repeating units.

In some preferred embodiments, the hydrophilic groups (i.e. oligomeric or polymeric groups) have a number average molecular weight (Mₙ) in the range of 100-50,000 g/mol, such as in the range of 100-30,000 g/mol, in particular in the range of 200-20,000 g/mol, or in the range of 200-10,000 g/mol.

In the present description with claims, the term "hydrophilic-modified" in the context of "hydrophilic-modified polysiloxane oil" is intended to mean that the oligomeric or polymeric groups with which the polysiloxane is modified, in themselves (i.e. as discrete molecules) have a solubility of at least 1 %(w/w) in demineralized water at 25°C.

Of particular interest are those hydrophilic-modified polysiloxane oils in which the relative weight of the hydrophilic moieties is 1% or more of the total weight (e.g. 1-90%), such as 5% or more (e.g. 5-80%), in particular 10% or more (e.g. 10-70%) of the total weight of the hydrophilic-modified polysiloxane oil.

In a preferred embodiment, the hydrophilic-modified polysiloxane oil (if present) has a number average molecular weight (Mₙ) in the range of 100-100,000 g/mol, such as in the range of 250-75,000 g/mol, in particular in the range of 500-50,000 g/mol.

It is also preferred if the hydrophilic-modified polysiloxane oils (if present) have a viscosity in the range of 10-20,000 mPa·s, such as in the range of 20-10,000 mPa·s, in particular in the range of 40-5,000 mPa·s.

In addition to the utilization of the polysiloxane components modified with hydrophilic oligomer/polymer moieties, the hydrophilic-modified polysiloxane oils may be utilized to control the leaching of the biocide.

In one currently preferred embodiment, the hydrophilic-modified polysiloxane oil is a poly(oxyalkylene)-modified polysiloxane.

In one variant hereof, the poly(oxyalkylene)-modified polysiloxane oil is a polysiloxane having grafted thereto poly(oxyalkylene) chains. An illustrative example of the structure of such hydrophilic-modified polysiloxane oils is formula (A): 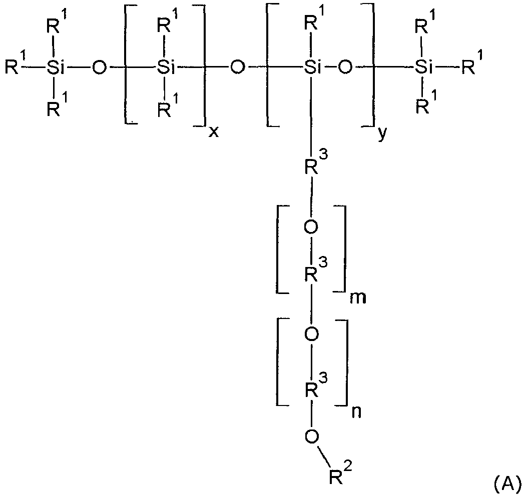 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; and n is 0-50, m is 0-50 and m+n is 1-50.

Commercially available hydrophilic-modified polysiloxane oils of this type are DC5103 (Dow Corning), DC Q2-5097 (Dow Corning), and DC193 (Dow Corning).

In another variant hereof, the poly(oxyalkylene)-modified polysiloxane oil is a polysiloxane having incorporated in the backbone thereof poly(oxyalkylene) chains. An illustrative example of the structure of such hydrophilic-modified polysiloxane oils is formula (B): 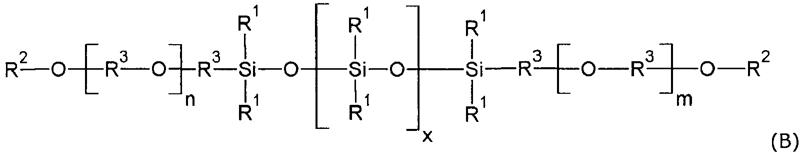 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500; and n is 0-50, m is 0-50 and m+n is 1-50.

Commercially available hydrophilic-modified polysiloxane oils of this type are DC Q4-3669 (Dow Corning), DC Q4-3667 (Dow Corning) and DC2-8692.

In still another variant hereof, the poly(oxyalkylene)-modified polysiloxane oil is a polysiloxane having incorporated in the backbone thereof polyoxyalkylene chains and having grafted thereto polyoxyalkylene chains. An illustrative example of the structure of such hydrophilic-modified polysiloxane oils is formula (C): 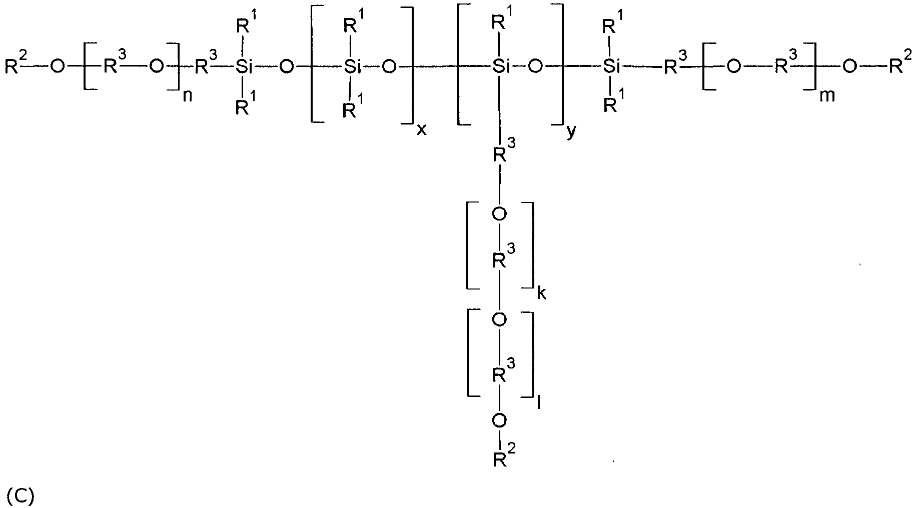 wherein each R¹ is independently selected from C₁₋₅-alkyl (including linear or branched hydrocarbon groups) and aryl (e.g. phenyl (-C₆H₅)), in particular methyl; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅- alkylene substituted with aryl (e.g. 1-phenyl ethylene), in particular from C₂₋₅-alkylene such as -CH₂CH₂- and -CH₂CH(CH₃)-); x is 0-2500, y is 1-100 and x+y is 1-2000; k is 0-50, l is 0-50 and k+l is 1-50; and n is 0-50, m is 0-50 and m+n is 1-50.

In the above structures (A), (B) and (C), the groups -CH₂CH(CH₃)-, -CH₂CH(CH₂CH₃)-, etc. may be present in any of the two possible orientations. Similarly, it should be understood that the segments present x and y times typically are randomly distributed, or distributed as blocks, within the polysiloxane structure.

In these embodiments and variants, the poly(oxyalkylene) is preferably selected from polyoxyethylene, polyoxypropylene and poly(oxyethylene-co-oxypropylene), which sometimes are referred to as poly(ethylene glycol), poly(propylene glycol) and poly(ethylene glycol-co-propylene glycol). Hence, in the above structures (A), (B) and (C), each R³ linking two oxygen atoms is preferably selected from -CH₂CH₂- and -CH₂CH(CH₃)-, whereas each R³ linking a silicon atom and an oxygen atom preferably is selected from C₂₋₅-alkyl.

It should be understood that the one or more non-reactive hydrophilic-modified polysiloxane oils if present may be of different types, e.g. two or more of the types described above.

The one or more hydrophilic-modified polysiloxane oils - if present - are included in the coating composition in an amount of 0.01-20 %, e.g. 0.05-10 %, by dry weight. In certain embodiments, the one or more hydrophilic-modified polysiloxane oils constitutes 0.05-7 % by dry weight, e.g. 0.1-5 % by dry weight, in particular 0.5-3 % by dry weight, of the coating composition. In certain other embodiments, the one or more hydrophilic-modified polysiloxane oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

When the one or more hydrophilic-modified polysiloxane oil and one or more biocides are included, the ratio between on the one hand the combined amount of the hydrophilic oligomer/polymer moieties of the binder matrix and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:12, or 1:0.1 to 10, even 1:0.15 to 1:6, or 1:0.1 to 1:5, or 1:0.2 to 1:4. In other embodiments, the ratio between on the one hand the combined amount of the hydrophilic oligomer/polymer moieties of the binder matrix and the one or more hydrophilic-modified polysiloxane oil(s) and on the other hand the one or more biocides is typically in the range of 1:0.02 to 1:20, or 1:0.05 to 1:20, or 1:0.06 to 1:16, or 1:0.08 to 1:14, or 1:0.1 to 12, even 1:0.15 to 1:10, or 1:0.05 to 1:9, or 1:0.1 to 1:8, or 1:0.2 to 1:7.

In should be understood, that in some very interesting embodiments, the paint coat (and the coating composition) is completely devoid of any hydrophilic-modified polysiloxane oils. Preferably, the paint composition (and the coating compostion) is also devoid of any of the non-reactive fluids mentioned under "additives" (i) and any fluorinated oils (cf. immediately below). Such compositions may be referred to as "oil free".

### Fluorinated oils

As an alternative to, or in addition to, the hydrophilic-modified polysiloxane oils, the coating composition (and thereby the paint coat) may have included therein one or more fluorinated oil(s). By the term "oil" is inherently meant that the constituent does not form covalent bonds to the polysiloxane-based binder matrix. Hence, the fluorinated oil(s) do not contain groups that can react with the binder (or binder components) or the cross-linker (if present), hence the one or more fluorinated oil(s) are intended to be non-reactive, in particular with respect to the binder components. In particular, the fluorinated oils are devoid of any silicon-reactive groups such as Si-OH groups, hydrolysable groups such as Si-OR (such as alkoxy, oxime, acetoxy etc.) groups, etc., so as to avoid reaction with constituents of the polysiloxane-based binder system.

It is preferred that the one or more fluorinated oil(s) (if present) have a viscosity in the range of 10-20,000 mPa·s, such as in the range of 20-10,000 mPa·s, in particular in the range of 40-5,000 mPa·s.

In a preferred embodiment, the fluorinated oil(s) (if present) has a number average molecular weight (Mₙ) in the range of 100-100,000 g/mol, such as in the range of 250-75,000 g/mol, in particular in the range of 500-50,000 g/mol.

The one or more fluorinated oils may be utilized to control the accessibility of the one or more enzymes and/or to control the leaching of any biocides, as well as to distribute the enzyme in the wet paint.

In one embodiment, the one or more fluorinated oils are selected from fluoroalkyl modified oils, e.g. perfluorinated oils, perfluoroalkyl-modified polysiloxane, perfluoro siloxane, perfluoro polyether, perfluorinated alkanes, or perfluoroalkyl modified polyalkylene oxide, perfluoro polyalkylene oxide.

Commercially available examples of such oils are:

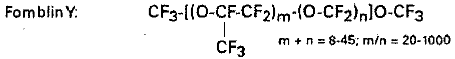

Lumiflon LF-200: (Fluoroethylene-Alkyl Vinyl Ether) alternating copolymer.

In another embodiment, the one or more fluorinated oils are selected from fluoroalkyl modified polyoxyalkylene polysiloxane oils (e.g. PEG-PDMS). These compounds are polysiloxanes which have been modified with fluoroalkylene and polyoxyalkylene, and can have a linear or branched/pendant conformation, or a combination of a linear and branched/pendant conformation. In the linear form, the polymer will generally have the structure A-B-C where A is a fluoroalkyl group, B is a polysiloxane and C is a polyoxyalkylene. Therefore, it will only have one fluoroalkyl group and one polyoxyalkylene group per polysiloxane molecule. In a variation, the modification of the polysiloxane molecule is in a branched/pendant conformation, in which the fluoroalkylene group(s) and the polyoxyalkylene group(s) are attached to the polysiloxane backbone in non-terminal positions. This allows more than one of each group per polysiloxane molecule. Examples of possible synthetic routes are disclosed in US 5,445,114.

This type of fluorinated oils appears to provide certain advantages. Without being bound to any particular theory, it is believed (i) that the migration of the oils to the surface of the coating during curing may be higher due to the fluorination; (ii) that the fluorination may lower the affinity of the oil to adsorb to pigments compared to non-fluorinated analogues.

Commercially available examples of such oils are Fluorosil 2110, a perfluoro nonyl ethyl PEG-8 dimethicone and C1910, a fluorinated silicone polyether of the same generic structure as Fluorosil 2110.

It should be understood that the one or more non-reactive fluorinated oil(s), if present, may be of different types, e.g. two or more of the types described above.

If present, the one or more fluorinated oils are typically included in the coating composition in an amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-3 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 3-5 % by dry weight, or 4-8 % by dry weight, of the coating composition.

Also, if present together with one or more hydrophilic-modified polysiloxane oils, the one or more fluorinated oils and the one or more hydrophilic-modified polysiloxane oils are typically included in the coating composition in a combined amount of 0.01-20 %, e.g. 0.05-10 %, by dry weight. In certain embodiments, the one or more fluorinated oils constitutes 0.05-7 % by dry weight, e.g. 0.1-5 % by dry weight, in particular 0.5-5 % by dry weight, of the coating composition. In certain other embodiments, the one or more fluorinated oils constitutes 1-10 % by dry weight, e.g. 2-9 % by dry weight, in particular 2-7 % by dry weight, or 3-7 % by dry weight, or 2-6 % by dry weight, or 3-5 % by dry weight, or 4-8 % by dry weight, of the coating composition.

### Coating compositions

In view of the above, the cured coating may be prepared from a range of different combinations of reactive polysiloxanes and silanes.

Hence, in one embodiment, the invention provides a fouling control coating composition comprising a polysiloxane-based binder system, said binder system comprising one or more polysiloxane components having pendant hydrophilic oligomer/polymer moieties. In one variant hereof, the coating composition further comprises one or more biocides, in particular such that the weight ratio between the hydrophilic oligomer/polymer moieties and the one or more biocides is in the range 1:0.02 to 1:20.

In another embodiment, the invention provides a fouling control coating composition comprising a polysiloxane-based binder system, said binder system comprising one or more hydrophilic oligomer/polymer moieties which at one end carry a -Si(R*)₃ group, wherein each R* independently is selected from C₁₋₄-alkyl and C₁₋₄-alkoxy, or R* is another curable termination, at least one being C₁₋₄-alkoxy, or at least one being another condensation curable termination. In this way, it is possible to construct a binder of a polysiloxane chain having grafts of the hydrophilic oligomer/polymer moieties.

In one embodiment hereof, the coating composition further comprises one or more biocides, in particular such that the weight ratio between the hydrophilic oligomer/polymer moieties and the one or more biocides is in the range 1:0.02 to 1:20.In a still further embodiment, the invention provides a fouling control coating composition comprising a polysiloxane-based binder system, wherein more than 50 % by weight of the binder matrix is represented by polysiloxane parts, said binder system comprising a cross-linker of formula (2) above, wherein R represents a poly(oxyalkylene).

In a still further embodiment, the invention provides a fouling control coating composition comprising a polysiloxane-based binder system, wherein more than 50 % by weight of the binder matrix is represented by polysiloxane parts, said binder system comprising a cross-linker of formula (2a) 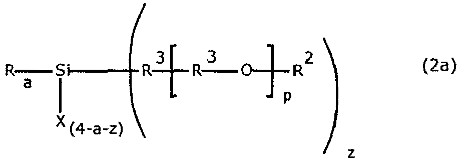 wherein, each R represents, independently, an unsubstituted or substituted monovalent hydrocarbon group of 1 to 6 carbon atoms or a hydrolysable group; each X represents, independently, a hydrolysable group; each R² is independently selected from -H, C₁₋₄-alkyl (e.g. -CH₃, -CH₂CH₃, -CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, -C(=O)CH₂CH₃ and -C(=O)CH₂CH₂CH₃), in particular -H and methyl; each R³ is independently selected from C₂₋₅-alkylene (e.g. -CH₂CH₂-, -CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-); p is 0-50; a is 0-2; z is 1-3.

In one variant of the above embodiments, the hydrophilic oligomer/polymer moieties are selected from poly(vinyl pyrrolidone), poly[N-(2-hydroxypropyl)methacrylamide], poly(acrylic acid), poly(glycerol), polyHEMA, polysaccharides, poly(vinyl alcohol), polyketones, poly(aldehyde guluronate), polyvinylamine, polycaprolactones, poly(vinyl acetate), polyoxyalkylenes like poly(ethylene glycol), poly(propylene glycol), poly(2-methyl-2-oxazoline), including copolymers of the foregoing, in particular poly(oxyalkylenes), especially from polyoxyethylene, polyoxypropylene and poly(oxyethylene-co-oxypropylene).

The term "polysiloxane-based binder system" is intended to mean that the binder system mainly consists of polysiloxane parts, i.e. that more than 50 % by weight, preferably more than 60 % by weight, e.g. more than 70 % by weight, of the binder system is represented by polysiloxane parts. Preferably, the polysiloxane parts constitute 50-99.99 % by weight, e.g. 50-99.9 % by weight, in particular 60-99.5 % by weight, or 50-99 % by weight, or 60-98 % by weight, or 70-97 % by weight, or even 70-99 % by weight, or 80-98 % by weight, or 90-97 % by weight, of the binder system (i.e. the binder components and any cross-linkers). The remainder of the binder system is preferably made of the hydrophilic oligomer/polymer moieties and any (non-polysiloxane-type) cross-linkers. This being said, the hydrophilic oligomer/polymer moieties preferably makes up 1-30 % by weight, such as 2-20 % by weight, e.g. 1-10 % by weight, of the binder system.

### Biocides

The coating composition used for forming a cured fouling control coat may also include one or more biocides.

In the present context, the term "biocide" is intended to mean an active substance intended to destroy, deter, render harmless, prevent the action of, or otherwise exert a controlling effect on any harmful organism by chemical or biological means.

Illustrative examples of biocides are those selected from metallo-dithiocarbamates such as bis(dimethyldithiocarbamato)zinc, ethylene-bis(dithiocarbamato)zinc, ethylene-bis(dithiocarbamato)manganese, and complexes between these; bis(1-hydroxy-2(1H)-pyridine-thionato-O,S)-copper; copper acrylate; bis(1-hydroxy-2(1H)-pyridinethionato-O,S)-zinc; phenyl(bispyridyl)-bismuth dichloride; metal biocides such as copper(I)oxide, cuprous oxide, metallic copper, copper metal alloys such as copper-nickel alloys; metal salts such as cuprous thiocyanate, basic copper carbonate, copper hydroxide, barium metaborate, and copper sulphide; heterocyclic nitrogen compounds such as 3a,4,7,7a-tetrahydro-2-((trichloromethyl)-thio)-1H-isoindole-1,3(2H)-dione, pyridine-triphenylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichloro-2-n-octyl-4-isothiazolin-3-one, 4,5-dichloro-2-octyl-3(2H)-isothiazoline (Sea-Nine^{®}-211N), 1,2-benzisothiazolin-3-one, and 2-(thiocyanatomethylthio)-benzothiazole; urea derivatives such as N-(1,3-bis(hydroxymethyl)-2,5-dioxo-4-imidazolidinyl)-N,N'-bis(hydroxymethyl)urea, and N-(3,4-dichlorophenyl)-N,N-dimethylurea, N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethyl-amines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethyl-amino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole and mixtures thereof.

Presently, it is preferred that the biocide does not comprise tin.

Currently preferred biocides are those selected from the group consisting of 2,4,5,6-tetrachloroisophtalonitrile (Chlorothalonil), copper thiocyanate (cuprous sulfocyanate), N-dichlorofluoromethylthio-N',N'-dimethyl-N-phenylsulfamide (Dichlofluanid), 3-(3,4-dichlorophenyl)-1,1-dimethylurea (Diuron), N²-tert-butyl-N⁴-cyclopropyl-6-methylthio-1,3,5-triazine-2,4-diamine (Cybutryne), 4-bromo-2-(4-chlorophenyl)-5-(trifluoromethyl)-1H-pyrrole-3-carbonitrile, (2-(p-chlorophenyl)-3-cyano-4-bromo-5-trifluoromethyl pyrrole; Tralopyril), *N²*-*tert*-butyl-*N⁴*-cyclopropyl-6-methylthio-1,3,5-triazine-2,4-diamine (Cybutryne), (RS)-4-[1-(2,3-dimethylphenyl)ethyl]-3H-imidazole (Medetomidine), 4,5-dichloro-2-n-octyl-4-isothiazolin-3-one (DCOIT, Sea-Nine^{®} 211N), dichlor-N-((dimethylamino)sulfonyl)fluor-N-(p-tolyl)methansulfenamid (Tolylfluanid), 2-(thiocyanomethylthio)-1,3-benzothiazole ((2-benzothiazolylthio)methyl thiocyanate; TCMTB), triphenylborane pyridine (TPBP); bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione; Copper Omadine), zinc ethylene-1,2-bis-dithiocarbamate (zinc-ethylene-N-N'-dithiocarbamate; Zineb), copper(i) oxide, metallic copper, 3-(3,4-dichlorophenyl)-1,1-dimethylurea (Diuron) and diiodomethyl-p-tolylsulfone; Amical 48. Preferably at least one biocide is selected from the above list.

In a particularly preferred embodiment, the biocides are preferably selected among biocides which are effective against soft fouling such as slime and algae. Examples of such biocides are N²-tert-butyl-N⁴-cyclopropyl-6-methylthio-1,3,5-triazine-2,4-diamine (Cybutryne), 4,5-dichloro-2-n-octyl-4-isothiazolin-3-one (DCOIT, Sea-Nine^{®} 211N), bis(1-hydroxy-2(1H)-pyridinethionato-O,S)-(T-4) zinc (zinc pyridinethione; zinc pyrithione), bis(1-hydroxy-2(1H)-pyridinethionato-O,S)-T-4) copper (copper pyridinethione; copper pyrithione) and zinc ethylene-1,2-bis-dithiocarbamate (zinc-ethylene-N-N'-dithiocarbamate; Zineb), copper(I) oxide, metallic copper, copper thiocyanate, (cuprous sulfocyanate), bis(1-hydroxy-2(1H)-pyridinethionato-O,S)-T-4) copper (copper pyridinethione; copper pyrithione; Copper Omadine).

In a further particularly preferred embodiment, the biocide is an organic biocide, such as a pyrithione complex, such as zinc pyrithione, or such as copper pyrithione. Organic biocides are those either fully or in part being of organic origin.

As detailed in US 7,377,968, in those instances in which the biocide is depleted rapidly from the film due to e.g. a high water solubility or a high level of immiscibility with the matrix composition, it can be advantageous to add one or more of the biocide(s) in encapsulated form as a means of controlling the biocide dosage and extending the effective lifetime in the film. Encapsulated biocides can also be added if the free biocide alters the properties of the polysiloxane matrix in a way that is detrimental for its use as antifouling coatings (e.g. mechanical integrity, drying times, etc.).

In a particularly preferred embodiment, the biocide is encapsulated 4,5-dichloro-2-n-octyl-4-isothiazolin-3-one (Sea-Nine CR2).

The biocide preferably has a solubility in the range of 0-20 mg/L, such as 0.00001-20 mg/L, in water at 25 °C.

When present, the biocide typically constitutes 0.1-15 % by dry weight, e.g. 0.5-8 % by dry weight, in particular 1-6 % by dry weight, of the coating composition.

The relative weight ratio between the hydrophilic oligomer/polymer moieties and the one or more biocides is typically in the range of 1:0.02 to 1:20, or 1:0.05 to 1:20, or 1:0.06 to 1:16, or 1:0.08 to 1:12, or 1:0.1 to 10, even 1:0.15 to 1:6, or 1:0.05 to 1:5, or 1:0.1 to 1:5, or 1:0.2 to 1:4. In other embodiments, the relative weight ratio between the hydrophilic oligomer/polymer moieties and the one or more biocides is typically in the range of 1:0.02 to 1:20, or 1:0.05 to 1:20, or 1:0.06 to 1:16, or 1:0.08 to 1:14, or 1:0.1 to 12, even 1:0.15 to 1:10, or 1:0.05 to 1:9, or 1:0.1 to 1:8, or 1:0.2 to 1:7.

### Catalyst

The coating composition used for forming a cured fouling control coat may further comprise a condensation catalyst to accelerate the cross-linking. Examples of suitable catalysts include organometal- and metal salts of organic carboxylic acids, such as dibutyl tin dilaurate, dibutyl tin diacetate, dibutyl tin dioctoate, dibutyl tin 2-ethylhexanoate, dioctyl tin dilaurate, dioctyl tin diacetate, dioctyl tin dioctoate, dioctyl tin 2-ethylhexanoate, dioctyltin di neodecanoate, tin naphthenate, tin butyrate, tin oleate, tin caprylate, bismuth 2-ethylhexanoate, bismuth octanoate, bismuth neodecanoate, iron 2-ethylhexanoate, lead 2-ethyloctoate, cobalt-2-ethylhexanoate, manganese 2-ethylhexanoate, zinc 2-ethylhexanoate, zinc naphthenate, zinc stearate, cobalt naphthenate and titanium naphtenate; titanate- and zirconate esters such as tetrabutyl titanate, tetrakis(2-ethylhexyl)titanate, triethanolamine titanate, tetra(isopropenyloxy)-titanate, titanium tetrabutanolate, titanium tatrapropanolate; titanium tetraisopropanolate, zirconium tetrapropanolate, zirconium tetrabutanolate; chelated titanates such as diisopropyl bis(acetylacetonyl)titanate. Further catalysts include tertiary amines, such as triethylamine, tetrametylethylenediamine, pentamethyldiethylenetriamine and 1,4-ethylenepiperazine. Further examples include guanidine based catalysts. Even further examples of condensation catalysts are described in WO 2008/132196 and US 2004/006190.

The catalyst may be used alone or as combination of two or more catalysts. The amount of catalyst to be used is depending on the reactivity of the catalyst and the cross-linker(s) and desired drying time. In a preferred embodiment the catalyst concentration is between 0.01-10 %, e.g. 0.01-3.0 %, or 5.0-10 %, or 0.1-4.0 %, or 1.0-6.0 %, by weight of the total combined amount of the binder (i) and cross-linking agent (ii).

In some embodiments, a catalyst is not included.

### Solvents, additives, pigments and fillers

The coating composition used for forming a cured fouling control coat may further comprise solvents and additives.

Examples of solvents are aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof. Alternatively, the solvent system may include water or be water-based (>50% water in the solvent system).

In one embodiment, the solvents are selected from aliphatic, cycloaliphatic and aromatic hydrocarbons such as white spirit, cyclohexane, toluene, xylene and naphtha solvent, esters such as methoxypropyl acetate, n-butyl acetate and 2-ethoxyethyl acetate; octamethyltrisiloxane, and mixtures thereof, preferably those solvents having a boiling point of 110 °C or more.

The solvents, if any, typically constitute 5-50 % by volume of the coating composition.

Examples of additives are:
(i) non-reactive fluids such as organopolysiloxanes; for example polydimethylsiloxane, methylphenyl polysiloxane; petroleum oils and combinations thereof;
(ii) surfactants such as derivatives of propylene oxide or ethylene oxide such as alkylphenol-ethylene oxide condensates (alkylphenol ethoxylates); ethoxylated monoethanolamides of unsaturated fatty acids such as ethoxylated monoethanolamides of linoleic acid; sodium dodecyl sulfate; and soya lecithin;
(iii) wetting agents and dispersants such as those described in M. Ash and I. Ash, "Handbook of Paint and Coating Raw Materials, Vol. 1", 1996, Gower Publ. Ltd., Great Britain, pp 821-823 and 849-851;
(iv) thickeners and anti-settling agents (e.g. thixotropic agents) such as colloidal silica, hydrated aluminium silicate (bentonite), aluminium tristearate, aluminium monostearate, xanthan gum, chrysotile, pyrogenic silica, hydrogenated castor oil, organo-modified clays, polyamide waxes and polyethylene waxes;
(v) dyes such as 1,4-bis(butylamino)anthraquinone and other anthraquinone derivatives; toluidine dyes, etc.; and
(vi) antioxidants such as bis(tert-butyl) hydroquinone, 2,6-bis(tert-butyl) phenol, resorcinol, 4-tert-butyl catechol, tris(2,4-di-tert-butylphenyl)phosphite, pentaerythritol Tetrakis(3-(3,5-di-tert-butyl-4-hydroxyphenyl)propionate), bis(2,2,6,6,-tetramethyl-4-piperidyl)sebacate, etc.

Any additives typically constitute 0-30 %, such as 0-15 %, by dry weight of the coating composition.

Preferably, the coating composition comprises one or more thickeners and anti-settling agents (e.g. thixotropic agents), preferably in an amount of 0.2-10 %, such as 0.5-5 %, e.g. 1-4 %, by dry weight of the coating composition.

Furthermore, the coating composition used for forming a cured fouling control coat may comprise pigments and fillers.

Pigments and fillers are in the present context viewed in conjunction as constituents that may be added to the coating composition with only limited implications on the adhesion properties. "Pigments" are normally characterised in that they render the final paint coating non-transparent and non-translucent, whereas "fillers" normally are characterised in that they do not render the paint non-translucent and therefore do not contribute significantly to hide any material below the coating.

Examples of pigments are grades of titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, black iron oxide, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow.

Examples of fillers are calcium carbonate such as calcite, dolomite, talc, mica, feldspar, barium sulfate, kaolin, nephelin, silica, perlite, magnesium oxide, and quartz flour, etc. Fillers (and pigments) may also be added in the form of nanotubes or fibres, thus, apart from the before-mentioned examples of fillers, the coating composition may also comprise fibres, e.g. those generally and specifically described in WO 00/77102 which is hereby incorporated by reference.

Any pigments and/or fillers typically constitute 0-60 %, such as 0-50 %, preferably 5-45 %, such as 5-40 %, or 5-35 %, or 0.5-25 %, or 1-20 %, by dry weight of the coating composition. Taking into account the density of any pigments and/or fillers, such constituents typically constitute 0.2-20 %, such as 0.5-15 % by solids volume of the coating composition.

With the aim of facilitating easy application of the coating composition (e.g. by spray, brush or roller application techniques), the coating composition typically has a viscosity in the range of 25-25,000 mPa·s, such as in the range of 150-15,000 mPa·s, in particular in the range of 200-4,000 mPa·s.

### Preparation of the coating composition

The coating composition may be prepared by any suitable technique that is commonly used within the field of paint production. Thus, the various constituents may be mixed together utilizing a mixer, a high speed disperser, a ball mill, a pearl mill, a grinder, a three-roll mill etc. The coating compositions are typically prepared and shipped as two- or three-component systems that should be combined and thoroughly mixed immediately prior to use. The paints according to the invention may be filtrated using bag filters, patron filters, wire gap filters, wedge wire filters, metal edge filters, EGLM turnoclean filters (ex. Cuno), DELTA strain filters (ex. Cuno), and Jenag Strainer filters (ex. Jenag), or by vibration filtration. An example of a suitable preparation method is described in the Examples.

The coating composition to be used in the method of the invention is typically prepared by mixing two or more components e.g. two pre-mixtures, one pre-mixture comprising the one or more reactive polysiloxane binders and one pre-mixture comprising the one or more cross-linking agents. It should be understood that when reference is made to the coating composition, it is the mixed coating composition ready to be applied. Furthermore, all amounts stated as % by dry weight of the coating composition should be understood as % by dry weight of the mixed paint composition ready to be applied, i.e. the weight apart from the solvents (if any).

### Specific embodiments of the paint coat

In one preferred embodiment the paint coat (preferably a top coat) comprises:
60-98 % by dry weight, or 70-93 % by dry weight, of the total paint coat composition of a silanol-terminated polydiorganosiloxane, one or more reactive polysiloxanes modified with pendant hydrophilic oligomer/polymer moieties selected from poly(oxyalkylene)-modified polysiloxanes, and a cross-linker.

In another preferred embodiment, the binder in the preferred embodiment above mentioned, has been pre-reacted in a moisture free environment to form a single component formulation by admixing 100 parts by weight of silanol terminated polydiorganosiloxane with 0.5-30 parts by weight of hydrolysable cross-linker, such as vinyltrimethoxysilane or a vinyloximosilane. In the above embodiments, the remainder of the paint coat (up to 100 % by dry weight) is preferably made up of one or more constituents selected from additives, including hydrophilic-modified polysiloxane oils (preferably those selected from the poly(oxyalkylene)-modified polysiloxane oils), catalysts, pigments, fillers, and biocides.

Preferably, the paint coats according to the above embodiments include additives, pigments and fillers in the amounts specified further above.

### Application of the coating composition

The coating composition of the invention is typically applied to at least a part of the surface of a substrate.

The term "applying" is used in its normal meaning within the paint industry. Thus, "applying" is conducted by means of any conventional means, e.g. by brush, by roller, by spraying, by dipping, etc. The commercially most interesting way of "applying" the coating composition is by spraying. Hence, the coating composition is preferably sprayable. Spraying is effected by means of conventional spraying equipment known to the person skilled in the art. The coating is typically applied in a dry film thickness of 50-600 µm, such as 50-500 µm, e.g. 75-400 µm, or 20-100 µm.

Moreover, the coating composition is preferably such with respect to sag resistance cf. ASTM D 4400-99 (i.e. relating to its ability to be applied in a suitable film thickness to a vertical surface without sagging) that it exhibits sag resistance for a wet film thickness up to at least 70 µm, such as up to at least 200 µm, preferably up to at least 400 µm, and in particular up to at least 600 µm.

The term "at least a part of the surface of a substrate" refers to the fact that the coating composition may be applied to any fraction of the surface. For many applications, the coating composition is at least applied to the part of the substrate (e.g. a vessel) where the surface (e.g. the ship's hull) may come in contact with water, e.g. sea-water.

The term "substrate" is intended to mean a solid material onto which the coating composition is applied. The substrate typically comprises a metal such as steel, iron, aluminium, or glass-fibre reinforced polyester. In the most interesting embodiments, the substrate is a metal substrate, in particular a steel substrate. In an alternative embodiment, the substrate is a glass-fibre reinforced polyester substrate. In some embodiments, the substrate is at least a part of the outermost surface of a marine structure.

The term "surface" is used in its normal sense, and refers to the exterior boundary of an object. Particular examples of such surfaces are the surface of marine structures, such as vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc.

The surface of the substrate may either be the "native" surface (e.g. the steel surface). However, the substrate is typically coated, e.g. with an anticorrosive coating and/or a tie coat, so that the surface of the substrate is constituted by such a coating. When present, the (anticorrosive and/or tie) coating is typically applied in a total dry film thickness of 100-600 µm, such as 150-450 µm, e.g. 200-400 µm. Alternatively, the substrate may carry a paint coat, e.g. a worn-out fouling control paint coat, or similar.

In one important embodiment, the substrate is a metal substrate (e.g. a steel substrate) coated with an anticorrosive coating such as an anticorrosive epoxy-based coating, e.g. cured epoxy-based coating, or a shop-primer, e.g. a zinc-rich shop-primer. In another relevant embodiment, the substrate is a glass-fiber reinforced polyester substrate coated with an epoxy primer coating.

It should be understood that the expression "fouling release" (as well as "fouling control") relates to all types of bio-fouling of a surface (i.e. settlement of organisms on a surface), in particular surfaces exposed to an aqueous environment or to aqueous liquids (e.g. within tanks, pipes, etc.). It is however, believed that the coatings defined herein are particularly relevant for avoiding or reducing marine bio-fouling, i.e. bio-fouling arising in connection with the exposure of a surface to a marine environment, in particular to sea-water.

### A Marine Structure

The present invention also provides a marine structure comprising on at least a part of the outer surface thereof an outermost fouling control coating prepared from a coating composition as defined hereinabove. In particular, at least as part of the outer surface carrying the outermost coating is a submerged part of said structure.

The coating composition, the method of establishing the coating on the substrate surface, and the characteristics of the coating follow the directions given hereinabove.

In one embodiment, the fouling control coating system of the marine structure may consist of an anticorrosive layer, a tie-coat and the fouling control coating as described herein.

In an alternative embodiment, the fouling control coating composition is applied on top of a used fouling control coating system, e.g.on top of a used polysiloxane-based fouling control coat.

In one particular embodiment of the above marine structure, the anticorrosive layer has a total dry film thickness of 100-600 µm, such as 150-450 µm, e.g. 200-400 µm; the tie-coat has a total dry film thickness of 50-500 µm, such as 50-400 µm, e.g. 75-350 µm or 75-300 µm or 75-250 µm; and the fouling control coating has a total dry film thickness of 20-500 µm, such as 20-400 µm, e.g. 50-300 µm.

A further embodiment of the marine structure is that where at least a part of the outermost surface of said structure is coated with a paint system comprising a total dry film thickness of 150-400 µm of an anticorrosive layer of an epoxy-based coating established by application of 1-4, such as 2-4, layers; a total dry film thickness of 20-400 µm of the tie-coat established by application of 1-2 layers; and a total dry film thickness of 20-400 µm of the fouling control coating established by application of 1-2 layers.

In another embodiment of the above marine structure, the fouling control coating is applied directly on the anticorrosive layer without the use of tie-coat.

### Use for improving the antifouling properties of a polysiloxane based coating composition

The invention further relates to the use of a reactive polysiloxane component having pendant hydrophilic oligomer/polymer moieties of non-silicon origin for improving the antifouling properties of a polysiloxane based coating composition, wherein said hydrophilic oligomer/polymer moieties are attached to the polysiloxane backbone at a non-terminal position, and said hydrophilic oligomer/polymer moieties being devoid of any bonds which are hydrolysable in sea-water, and wherein said reactive polysiloxane is a functional organopolysiloxane with terminal functionality.

It should be understood that the types of the polysiloxanes modified with hydrophilic oligomer/polymer moieties, the biocides, and the types of suitable polysiloxane based binder systems are as defined further above, just at the amounts and relative proportions of the various ingredients are as defined further above.

### General Remarks

Although the present description and claims occasionally refer to a polysiloxane, etc., it should be understood that the coating compositions defined herein may comprise one, two or more types of the individual constituents. In such embodiments, the total amount of the respective constituent should correspond to the amount defined above for the individual constituent.

The "(s)" in the expressions: compound(s), polysiloxane(s), agent(s), etc. indicates that one, two or more types of the individual constituents may be present.

On the other hand, when the expression "one" is used, only one (1) of the respective constituent is present.

### EXAMPLES

### Materials

RF-5000, ex. Shin-Etsu - Japan, silanol-terminated polydimethylsiloxane
Xylene from local supplier
Toluene from local supplier
Bayferrox 130M, ex. Lanxess - Germany, Iron oxide
Aerosil R8200, ex. Evonik Industries - Germany, Hexamethyldisilazane treated fumed silica DC550, ex. Dow Corning - USA, non-reactive methylphenyl polysiloxane
DC190, ex. Dow Corning - USA, non-reactive polyether modified polysiloxane
Copper Omadine, ex. Arch Chemicals Inc. - Ireland, Copper Pyrithione
Silikat TES 40 WN, ex. Wacker Chemie - Germany, Ethyl silicate
Neostann U-12, ex. Nitto Kasai - Japan, Dibutyltin Dilaurate
Acetylaceton, ex. Wacker Chemie - Germany, 2,4-pentanedione
Dynasylan VTMO, ex. Evonik Industries - Germany, vinyltrimethoxysilane
Platinum - divinyltetramethyldisiloxane complex in xylene - 2.1-2.4% platinum concentration, CAS No. 68478-92-2
Polydimethylsiloxane, hydride terminated - MWₙ =1100, eq. weight = 550 g/eq Methylhydrosiloxane - dimethylsiloxane copolymer, hydride terminated - MWn = 2300, eq. weight = 200 g/eq
Polyethylene glycol di allyl ether - MWₙ = 300g/mol, Eq. weight =150 g/eq
Polyethylene glycol mono allyl ether (hydroxyl terminated) - MWₙ = 350 g/mol, eq. weight = 350 g/eq
Polyethylene glycol mono allyl ether (hydroxyl terminated) - MWₙ = 500 g/mol, eq. weight = 500 g/eq

### Viscosity

In the present application with claims, viscosity is measured at 25 °C in accordance with ISO 2555:1989.

### Preparation method for the model paints

### Pendant hydrophilic modified polysiloxane (HMP1):

A pendant, curable poly(ethylene glycol) modified polysiloxane is prepared by mixing 25.0.g (polydimethylsiloxane-methylhydrosiloxane, hydride terminated) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 80°C. To this solution, 11.0 g of (vinyltrimethoxysilane) is added dropwise and allowed to react for 1 h at 80°C. After the completion of the reaction, 54.5 g polyethylene glycol mono allyl ether is added dropwise, and allowed to react for 4h at 80°C. The solvent was hereafter partially removed under reduced pressure using a rotary evaporator until the solvent content reached 10% to obtain the final product HMP1. The content of PEG-modified PDMS binder in HMP1 is 90 % w/w. The amount of PEG in the HMP1 binder is 60.2% w/w calculated on dry weight.

### Linear hydrophilic modified polysiloxane (HMP2) (reference):

A linear, curable poly(ethylene glycol) modified polysiloxane is prepared by mixing 5.00 g (polyethylene glycol diallyl ether) dissolved in 50.0 g water free toluene, with 0.013 g of a solution of platinum-divinyltetramethyldisiloxane complex in xylene in a three necked flask with reflux and a continuous flow of dry nitrogen gas to keep the reaction atmosphere moisture free. A magnetic stirrer is used in the reaction flask to keep the solution agitated during the synthesis. The solution is heated to 65°C. To this solution, 65.0 g polydimethylsiloxane (hydride terminated) is added dropwise, and allowed to react for 1 h at 80°C. After the completion of the reaction, 35.0 g of vinyltrimethoxysilane is added dropwise at 80°C and allowed to react for 1 h at 80°C. The solvent was hereafter partially removed under reduced pressure using a rotary evaporator until the solvent content reached 10% to obtain the final product HMP2. The content of PEG-modified PDMS binder in HMP2 is 90 % w/w. The amount of PEG in the HMP2 binder is 4.8% w/w calculated on dry weight.

### Pendant hydrophilic modified polsiloxane (HMP3):

A pendant, curable poly(ethylene glycol) modified polysiloxane is prepared by mixing 25.0 g polydimethylsiloxane-methylhydrosiloxane, hydride terminated dissolved in 50.0 g water free toluene, with 0.14 g platinum - divinyltetramethyldisiloxane complex in xylene solution. The solution is heated to 80°C. To this solution, 4.0 g of vinyltrimethoxysilane is added dropwise and allowed to react for ½h at 80°C. After the completion of the reaction, 68.5 g polyethylene glycol mono allyl ether [A350] is added drop wise, and allowed to react for 3h at 80°C. The content of PEG-modified PDMS binder in HMP3 is 66.1 % w/w. The amount of PEG in the HMP3 binder is 70.3% w/w calculated on dry weight.

### Linear hydrophilic modified polysiloxane (HMP4) (reference):

A linear, curable poly(ethylene glycol) modified polysiloxane is prepared by mixing 100.0 g of hydride terminated polydimethylsiloxane dissolved in 75.0 g water free toluene, with 0.17 g of platinum - divinyltetramethyldisiloxane complex in xylene solution. The solution is heated to 80°C under stirring. To this solution 1.7 g polyethylene glycol di allyl ether [AA300] is added dropwise, and allowed to react for 2h at 80°C. After the completion of the reaction 5.4 g of vinyltrimethoxysilane is added dropwise at 80°C and allowed to react for 1h at 80°C. The content of PEG-modified PDMS binder in HMP4 is 58.8 % w/w. The amount of PEG in the HMP4 binder is 1.6% w/w calculated on dry weight.

### Pendant hydrophilic modified polysiloxane (HMP5):

A pendant, curable poly(ethylene glycol) modified polysiloxane is prepared by mixing 25.0 g polydimethylsiloxane-methylhydrosiloxane, hydride terminated dissolved in 50.0 g water free toluene, with 0.14 g platinum - divinyltetramethyldisiloxane complex in xylene solution. The solution is heated to 80°C. To this solution, 4.0 g of vinyltrimethoxysilane is added dropwise and allowed to react for ½h at 80°C. After the completion of the reaction, 90.0 g polyethylene glycol mono allyl ether [A500] is added dropwise, and allowed to react for 3h at 80°C. The content of PEG-modified PDMS binder in HMP5 is 70.4 % w/w. The amount of PEG in the HMP5 binder is 75.6% w/w calculated on dry weight.

### Composition A to O:

Part (i): silanol-terminated polydimethylsiloxane, xylene, silica, polyamide wax, red iron oxide, (biocide) are mixed on a Diaf dissolver equipped with an impeller disc (70 mm in diameter) in a 1 L can for 15 minutes at 2000 rpm.

Part (ii): ethyl silicate, (xylene), catalyst, 2,4-pentanedione, (phenyl methyl polysiloxane) are mixed on a Diaf dissolver equipped with an impeller disc (70 mm in diameter) in a 1 L can for 2 minutes at 500 rpm.

Part (iii): (Reactive hydrophilic modified polysiloxane) the container is closed under dry nitrogen to avoid moisture. Before the application, part (i), part (ii) and part (iii) are mixed to a homogenous mixture.

### Test Methods

### Blister Box Test

The Blister Box test is used to determine the influence of polysiloxanes modified with hydrophilic oligomer/polymer moieties on the stability of the PDMS coating to which they are added to.

### Preparation of panels

Steel panels (150x75x15 mm) are coated with 100 µm (dry film thickness, DFT) of a commercial epoxy primer (HEMPADUR Quattro 17634) applied by airless spraying. After 12 - 48 hrs of drying at room temperature a silicone tie coat (HEMPASIL Nexus 27302) is applied by doctor blade of 300 µm clearance. After 16-30 hrs of drying the top coat paint compositions are applied by doctor blade of 400 µm clearance. The panels are dried for 24 hrs before testing in the blister box.

### Testing

The panel surface with the coating system is exposed to 40 °C, saturated water vapour, at an angle of 15°/60° to the horizontal. The reverse side of the panel is exposed to room temperature. At the selected inspection intervals during and after completion of exposure, adhesion between tie coat/top coat and general condition of the top coat are evaluated.

Evaluation of adhesion between tie coat and top coat is based on the below ranking:

| | |
|---|---|
| Adhesion | Ranking Value |
| FAIL/POOR | No adhesion/poor adhesion |
| GOOD | Acceptable adhesion |

Panels are exposed for two months and typically checked every week.

### Raft Test

### Preparation of panels

An acrylic panel (150x200 mm), sandblasted on one side to facilitate adhesion of the coating, is coated with 100 µm (DFT) of a commercial epoxy (HEMPEL Light Primer 45551) applied by air spraying. After 6 - 24 hrs of drying at room temperature a tie coat is applied by doctor blade of 300 µm clearance. After 16-30 hrs of drying the top coat paint compositions are applied by doctor blade of 400 µm clearance. The panels are dried for at least 72 hrs before immersion on the raft.

### Testing

Panels are tested at two different locations; Spain and Singapore.

### Test site in Spain

Located in Vilanova in north-eastern Spain. At this test site the panels are immersed into sea water with salinity in the range of 37-38 parts per thousand at an average temperature of 17-18 °C.

### Test site in Singapore

At this test site the panels are immersed into sea water with salinity in the range of 29-31 parts per thousand at a temperature in the range of 29-31 °C.

Panels are inspected ever 4-12 weeks and evaluated according to the following scale:

| **Level** | **Description** |
|---|---|
| Excellent | Only slime |
| Good | Algae + Animals < 10 % |
| Fair | 10 % < Algae + Animals < 25 % |
| Poor | Algae + Animals > 25 % |

### Examples

The following model paints was prepared for testing for antifouling performance. All entries in model paints table are in weight unless otherwise stated. In the calculation of the final polysiloxane matrix, all the hydrolysable groups are presumed completely hydrolysed and reacted into a matrix through a condensation reaction with the polysiloxane binder. Therefore, the ethyl silicate contributes with 41 % of its weight to the calculations of the final polysiloxane matrix and vinyltrimethoxysilane contributes with 54 % of its weight correspondingly.

| Model paints | Top coat composition A | Top coat composition B (reference) | Top coat composition C (reference) |
|---|---|---|---|
| **Part (i)** | | | |
| Silanol-terminated polydimethylsiloxane | 59.1 | 64.1 | 27.1 |
| Xylene | 17.4 | 17.4 | 17.4 |
| Thixotropic agent | 2.2 | 2.2 | 2.2 |
| Pigments | 8.9 | 8.9 | 8.9 |
| **Total part (i)** | 87.6 | 92.6 | 55.6 |

| **Part (ii)** | | | |
|---|---|---|---|
| Ethyl silicate | 2.3 | 2.3 | 2.3 |
| Xylene | 3.6 | 3.6 | 3.6 |
| Dibutyltin dilaurate | 0.4 | 0.4 | 0.4 |
| 2,4-pentanedione | 1.1 | 1.1 | 1.1 |
| **Total part (ii)** | 7.4 | 7.4 | 7.4 |

| **Part (iii)** | | | |
|---|---|---|---|
| Pendant hydrophilic modified polysiloxane (HMP 1) | 5 | - | - |
| Linear hydrophilic modified polysiloxane (HMP 2) | - | - | 37 |
| **Total part (iii)** | 5 | 0 | 37 |
| **Total part (i), (ii), (iii)** | 100 | 100 | 100 |
| Hydrophilic oligomer/polymer | 2.71 | - | 1.59 |
| Hydrophilic oligomer/polymer : biocide (1:x) | - | - | - |
| Hydrophilic oligomer/polymer in % of binder phase | 4.11 | - | 2.53 |
| HMP binder in % of binder phase | 6.8 | 0 | 53.1 |
| Polysiloxane content of the binder matrix (wt%) | 95.8 | 100 | 97.2 |
| Performance on raft in Spain (8w) | Good | Poor | Fair |
| Adhesion | Good | Good | Good |

*Comments:* From examples A-C it is observed that the incorporation of a curable polysiloxane modified with pendant hydrophilic moieties improves the performance of a paint without any hydrophilic modification. It is also observed that incorporation of a curable polysiloxane modified with hydrophilic moieties of the ABA-type improves the performance of a paint without any hydrophilic modification, but not to the same level as seen with the pendant hydrophilic groups.

| Model paints | Top coat composition D | Top coat composition E (reference) |
|---|---|---|
| **Part (i)** | | |
| Silanol-terminated polydimethylsiloxane | 59.1 | 64.1 |
| Xylene | 17.4 | 17.4 |
| Thixotropic agent | 2.2 | 2.2 |
| Pigments | 4.1 | 4.1 |
| Biocides: | | |
| Copper pyrithione | 4.8 | 4.8 |
| **Total part (i)** | 87.6 | 92.6 |

| **Part (ii)** | | |
|---|---|---|
| Ethyl silicate | 2.3 | 2.3 |
| Xylene | 3.6 | 3.6 |
| Dibutyltin dilaurate | 0.4 | 0.4 |
| 2,4-pentanedione | 1.1 | 1.1 |
| **Total part (ii)** | 7.4 | 7.4 |

| **Part (iii)** | | |
|---|---|---|
| Pendant hydrophilic modified polysiloxane (HMP 1) | 5 | |
| **Total part (iii)** | 5 | 0 |
| **Total part (i)**, **(ii), (iii)** | 100 | 100 |
| Hydrophilic oligomer/polymer | 2.71 | 0 |
| Hydrophilic oligomer/polymer : biocide (1:x) | 1.77 | - |
| Hydrophilic oligomer/polymer in % of binder phase | 4.11 | 0- |
| HMP binder in % of binder phase | 6.83 | 0 |
| Polysiloxane content of the binder matrix (wt%) | 95.8 | 100 |
| Performance on raft in Singapore (8w) | Good | Fair |
| Adhesion | Good | Good |

*Comments:* The example D illustrates the performance of the hydrophilic polymers containing paint compositions when biocides have been incorporated in the paint matrix. Reference example E is a biocide containing paint composition that does not contain hydrophilic moieties or non-reactive polysiloxanes oils.

| Model paints | Top coat composition F (reference) | Top coat composition G | Top coat composition H | Top coat composition I (reference) | Top coat composition J (reference) |
|---|---|---|---|---|---|
| **Part (i)** | | | - | - | |
| Silanol-terminated polydimethylsiloxane | 64.1 | 57.8 | 48.4 | 49 | 33 |
| Xylene | 17.4 | 14.2 | 9.1 | 7 | 0 |
| Thixotropic agent | 2.2 | 2.2 | 2.2 | 2.2 | 2.2 |
| Pigments | 8.9 | 8.9 | 8.9 | 9.0 | 9.1 |
| **Total part (i)** | 92.6 | 83.1 | 73.7 | 77.7 | 44.3 |

| **Part (ii)** | | | | | |
|---|---|---|---|---|---|
| Ethyl silicate | 2.3 | 2.1 | 2.1 | 1.8 | 1.2 |
| Xylene | 3.6 | 3.6 | 3.6 | 3.6 | |
| Dibutyltin dilaurate | 0.4 | 0.4 | 0.4 | 0.4 | 0.4 |
| 2,4-pentanedione | 1.1 | 1.1 | 1.1 | 1.1 | 1.1 |
| **Total part (ii)** | 7.4 | 7.2 | 7.2 | 6.9 | 2.7 |

| **Part (iii)** | | | | | |
|---|---|---|---|---|---|
| Pendant hydrophilic modified polysiloxane (HMP 3) | | 9.7 | 24.2 | | |
| Linear hydrophilic modified polysiloxane (HMP 4) | | | | 25.9 | 53 |
| **Total part (iii)** | | 9.7 | 24.2 | 25.9 | 53 |
| **Total part (i), (ii), (iii)** | 100 | 100 | 100 | 100 | 100 |
| Hydrophilic oligomer/polymer | 0 | 4.50 | 11.2 | 0.24 | 0.49 |
| Hydrophilic oligomer/polymer in % of binder phase | 0 | 6.8 | 16.9 | 0.4 | 0.8 |
| HMP binder in % of binder phase | 0 | 9.7 | 24.1 | 23.1 | 47.7 |
| Polysiloxane content of the binder matrix (wt%) | 100 | 93.1 | 82.7 | 99.6 | 99.2 |
| Performance on raft in Spain (4w) | Poor | Good | Good | Poor | Poor |
| Performance on raft in Spain (7 weeks) | Poor | Fair | Good | Poor | Poor |

*Comments:* The example illustrates the performance of pendant hydrophilic modified binders (G and H) when compared to a non-modified pure polydimethylsiloxane-based coating (F). Also the example shows that a pendant modified polysiloxane binder is an improvement over a binder modified as ABA polymer (G and H compared against reference examplesI and J).

| Model paints | Top coat composition K (reference) | Top coat composition L | Top coat composition M | Top coat composition N | Top coat composition O |
|---|---|---|---|---|---|
| **Part (i)** | | | | | |
| Silanol-terminated polydimethylsiloxane | 64.1 | 58.0 | 61.1 | 55.1 | 55.1 |
| Xylene | 17.4 | 13.7 | 15.4 | 13.6 | 13.7 |
| Thixotropic agent | 2.2 | 2.2 | 2.2 | 2.2 | 2.2 |
| Pigments | 8.9 | 8.9 | 8.9 | 8.9 | 8.9 |
| **Total part (i)** | 92.6 | 82.8 | 87.6 | 79.8 | 79.9 |

| **Part (ii)** | | | | | |
|---|---|---|---|---|---|
| Ethyl silicate | 2.3 | 2.1 | 2.2 | 2.0 | 2.0 |
| Xylene | 3.6 | 3.6 | 3.6 | 3.6 | 3.6 |
| Dibutyltin dilaurate | 0.4 | 0.4 | 0.4 | 0.4 | 0.4 |
| 2,4-pentanedione | 1.1 | 1.1 | 1.1 | 1.1 | 1.1 |
| non-reactive methylphenyl polysiloxane | | | | | 3.0 |
| non-reactive polyether modified polysiloxane | | | | 3.0 | |
| **Total part (ii)** | 7.4 | 7.2 | 7.3 | 10.1 | 10.1 |

| **Part (iii)** | | | | | |
|---|---|---|---|---|---|
| Pendant hydrophilic modified polysiloxane (HMP 5) | | 10.0 | 5.0 | 10.0 | 10.0 |
| **Total part (iii)** | | 10.0 | 5.0 | 10.0 | 10.0 |
| **Total part (i), (ii), (iii)** | 100 | 100 | 99.9 | 99.9 | 100 |
| Hydrophilic oligomer/polymer | 0 | 5.3 | 2.7 | 5.3 | 5.3 |
| Hydrophilic oligomer/polymer in % of binder phase | 0 | 7.9 | 4.0 | 8.3 | 8.3 |
| HMP binder in % of binder phase | 0 | 10.5 | 5.3 | 11.0 | 11.0 |
| Polysiloxane content of the binder matrix (wt%) | 100 | 91.9 | 95.9 | 91.5 | 91.5 |
| Performance on raft in Spain (7 weeks) | Poor | Good | Fair | Excellent | Excellent |

*Comments:* The examples L and M illustrate the performance of hydrophilic modified binder over pure polysiloxane (reference example K). Also, the examples N and O shows that the addition of non-reactive silicone oils may further improve performance of the fouling control coatings which contains a curable, pendant hydrophilic modified polysiloxane (HMP5).

## Claims

1. A cured fouling control paint coat comprising a polysiloxane-based binder matrix, said binder matrix having included as a part thereof pendant hydrophilic oligomer/polymer moieties of non-silicon origin, wherein said hydrophilic oligomer/polymer moieties are attached to the polysiloxane backbone at a non-terminal position, and said hydrophilic oligomer/polymer moieties are devoid of any bonds which are hydrolysable in sea-water, wherein more than 50 % by weight of the binder matrix is represented by polysiloxane parts, and wherein said polysiloxane is derived from a functional organopolysiloxane with terminal functionality.

2. The paint coat according to claim 1, wherein the hydrophilic oligomer/polymer moieties are selected from poly(vinyl pyrrolidone), poly[N-(2-hydroxypropyl)methacryl-amide], poly(acrylic acid), poly(glycerol), polyHEMA, polysaccharides, poly(vinyl alcohol), polyketones, poly(aldehyde guluronate), polyvinylamine, poly(vinyl acetate), polyoxyalkylenes like poly(ethylene glycol), poly(propylene glycol), poly(2-methyl-2-oxazoline), including copolymers of the foregoing, in particular poly(oxyalkylenes).

3. The paint coat according to claim 2, wherein the poly(oxyalkylene) is selected from polyoxyethylene, polyoxypropylene and poly(oxyethylene-co-oxypropylene).

4. The paint coat according to any one of the preceding claims, which is devoid of any oils.

5. The paint coat according to any one of the claims 1-3, which further comprises a hydrophilic-modified polysiloxane oil selected from poly(oxyalkylene)-modified polysiloxanes.

6. The paint coat according to any one of the preceding claims, which further comprises one or more biocides.

7. A marine structure comprising on at least a part of the outer surface thereof a paint coat as defined in any one of the preceding claims.

8. The structure according to claim 7, wherein at least as part of the outer surface carrying the outermost coating is a submerged part of said structure.

9. A fouling control coating composition comprising a polysiloxane-based binder system, said binder system comprising one or more reactive polysiloxane components modified with pendant hydrophilic oligomer/polymer moieties of non-silicon origin, wherein said hydrophilic oligomer/polymer moieties are attached to the polysiloxane backbone at a non-terminal position, and said hydrophilic oligomer/polymer moieties are devoid of any bonds which are hydrolysable in sea-water, and wherein said reactive polysiloxane is a functional organopolysiloxane with terminal functionality.

10. The coating composition according to claim 9, wherein the hydrophilic oligomer/polymer moieties are selected from poly(vinyl pyrrolidone), poly[N-(2-hydroxypropyl)methacrylamide], poly(acrylic acid), poly(glycerol), polyHEMA, polysaccharides, poly(vinyl alcohol), polyketones, poly(aldehyde guluronate), polyvinylamine, poly(vinyl acetate), polyoxyalkylenes like poly(ethylene glycol), poly(propylene glycol), poly(2-methyl-2-oxazoline), including copolymers of the foregoing, in particular poly(oxyalkylenes).

11. The coating composition according to claim 10, wherein the poly(oxyalkylene) is selected from polyoxyethylene, polyoxypropylene and poly(oxyethylene-co-oxypropylene).

12. The coating composition according to any one of the claims 11, which further comprises one or more biocides.

13. Use of a reactive polysiloxane component having pendant hydrophilic oligomer/polymer moieties of non-silicon origin for improving the antifouling properties of a polysiloxane based coating composition, wherein said hydrophilic oligomer/polymer moieties are attached to the polysiloxane backbone at a non-terminal position, and said hydrophilic oligomer/polymer moieties being devoid of any bonds which are hydrolysable in sea-water, and wherein said reactive polysiloxane is a functional organopolysiloxane with terminal functionality.

## Patentansprüche

1. Ausgehärteter Fäulniskontrollanstrich, umfassend eine Bindemittelmatrix auf Polysiloxan-Basis, wobei die Bindemittelmatrix als Teil von ihr seitenständige hydrophile Oligomer-/Polymer-Einheiten umfasst, die die nicht von einer Siliciumverbindung abstammen, wobei die hydrophilen Oligomer-/PolymerEinheiten an einer nicht-terminalen Position mit dem Polysiloxan-Gerüst verbunden sind, und wobei die hydrophilen Oligomer-/Polymer-Einheiten frei von Bindungen sind, die in Meerwasser hydrolysierbar sind, wobei mehr als 50 Gew.-% der Bindemittelmatrix durch Polysiloxan-Anteile gebildet sind und wobei das Polysiloxan aus einem funktionalen Organopolysiloxan mit terminaler Funktionalität abgeleitet ist.

2. Anstrich nach Anspruch 1, wobei die hydrophilen Oligomer-/Polymer-Einheiten ausgewählt sind aus Poly(vinylpyrrolidon), Poly[N-(2-hydroxypropyl)methacrylamid], Poly(acrylsäure), Poly(glycerin), PolyHEMA, Polysacchariden, Poly(vinylalkohol), Polyketonen, Poly(aldehydguluronat), Polyvinylamin, Poly(vinylacetat), Poly(oxyalkylenen) wie Poly(ethylenglycol), Poly(propylenglycol), Poly(2-methyl-2-oxazolin), einschließlich Copolymeren der Obigen, insbesondere Poly(oxyalkylenen).

3. Anstrich nach Anspruch 2, wobei das Poly(oxyalkylen) aus Poly(oxyethylen), Poly(oxypropylen) und Poly(oxyethylen-co-oxypropylen) ausgewählt ist.

4. Anstrich nach einem der vorhergehenden Ansprüche, der frei von Ölen ist.

5. Anstrich nach einem der Ansprüche 1 bis 3, der ferner ein hydrophil modifiziertes Polysiloxanöl umfasst, das aus Poly(oxyalkylen)-modifizierten Polysiloxanen ausgewählt ist.

6. Anstrich nach einem der vorhergehenden Ansprüche, der ferner ein oder mehrere Biozide umfasst.

7. Schiffsstruktur, umfassend an wenigstens einem Teil ihrer Außenfläche einen Anstrich, wie er in einem der vorhergehenden Ansprüche definiert wird.

8. Struktur nach Anspruch 7, wobei wenigstens ein Teil der Außenfläche, welche die äußerste Beschichtung trägt, ein unter Wasser befindlicher Teil der Struktur ist.

9. Fäulniskontrollbeschichtungszusammensetzung, umfassend ein Bindemittelsystem auf Polysiloxan-Basis, wobei das Bindemittelsystem eine oder mehrere reaktive Polysiloxankomponenten umfasst, die mit seitenständigen hydrophilen Oligomer-/Polymer-Einheiten modifiziert sind, die nicht von einer Siliciumverbindung abstammen, wobei die hydrophilen Oligomer-/PolymerEinheiten an einer nicht-terminalen Position mit dem Polysiloxan-Gerüst verbunden sind, und wobei die hydrophilen Oligomer-/Polymer-Einheiten frei von Bindungen sind, die in Meerwasser hydrolysierbar sind und wobei das reaktive Polysiloxan ein funktionales Organopolysiloxan mit terminaler Funktionalität ist.

10. Beschichtungszusammensetzung nach Anspruch 9, wobei die hydrophile Oligomer-/Polymer-Einheiten ausgewählt sind aus Poly(vinylpyrrolidon), Poly[N-(2-hydroxypropyl)methacrylamid], Poly(acrylsäure), Poly(glycerol), PolyHEMA, Polysacchariden, Poly(vinylalkohol), Polyketonen, Poly(aldehydguluronat), Polyvinylamin, Poly(vinylacetat), Poly(oxyalkylen)en wie Poly(ethylenglycol), Poly(propylenglycol), Poly(2-methyl-2-oxazolin), einschließlich Copolymeren der Obigen, insbesondere Poly(oxyalkylenen).

11. Beschichtungszusammensetzung nach Anspruch 10, wobei das Poly(oxyalkylen) aus Poly(oxyethylen), Poly(oxypropylen) und Poly(oxyethylen-co-oxypropylen) ausgewählt ist.

12. Beschichtungszusammensetzung nach einem der Ansprüche 9-11, die ferner ein oder mehrere Biozide umfasst.

13. Verwendung einer reaktiven Polysiloxankomponente mit seitenständigen hydrophilen Oligomer-/Polymer-Einheiten, die nicht von einer Siliciumverbindung abstammen, zur Verbesserung der Antifäulniseigenschaften einer Beschichtungszusammensetzung auf Polysiloxan-Basis, wobei die hydrophilen Oligomer-/Polymer-Einheiten an einer nicht-terminalen Position mit dem Polysiloxan-Gerüst verbunden sind und wobei die hydrophilen Oligomer-/PolymerEinheiten frei von Bindungen sind, die in Meerwasser hydrolysierbar sind, und wobei das reaktive Polysiloxan ein funktionales Organopolysiloxan mit terminaler Funktionalität ist.

## Revendications

1. Revêtement de peinture durci anti-salissures comprenant une matrice liante à base de polysiloxane, des fractions oligomères/polymères hydrophiles pendantes d'origine autre que le silicium étant incluses dans ladite matrice liante en tant que partie de celle-ci, dans lequel lesdites fractions oligomères/polymères hydrophiles sont liées au squelette polysiloxane au niveau d'une position non terminale, et lesdites fractions oligomères/polymères hydrophiles sont dépourvues de toute liaison qui peut être hydrolysée dans l'eau de mer, dans lequel pas plus de 50 % en poids de la matrice liante sont représentés par des parties polysiloxane, et dans lequel ledit polysiloxane est dérivé d'un organopolysiloxane fonctionnel avec une fonctionnalité terminale.

2. Revêtement de peinture selon la revendication 1, dans lequel les fractions oligomères/polymères hydrophiles sont sélectionnées parmi la poly(vinyl pyrrolidone), le poly[N-(2-hydroxypropyl)méthacrylamide], le poly(acide acrylique), le poly(glycérol), le polyHEMA, les polysaccharides, le poly(alcool vinylique), les polycétones, le poly(aldéhyde guluronate), la polyvinylamine, le poly(acétate de vinyle), les poly(oxyalkylènes) tels que le poly (éthylène glycol), le poly(propylène glycol), la poly(2-méthyl-2-oxazoline), y compris les copolymères des composés précédents, en particulier les poly(oxyalkylènes).

3. Revêtement de peinture selon la revendication 2, dans lequel le poly(oxyalkylène) est sélectionné parmi le poly(oxyéthylène), le poly(oxypropylène) et le poly(oxyéthylène-co-oxypropylène).

4. Revêtement de peinture selon l'une quelconque des revendications précédentes, qui est dépourvu de toute huile.

5. Revêtement de peinture selon l'une quelconque des revendications 1 à 3, qui comprend en outre une huile de polysiloxane modifié hydrophile sélectionnée parmi les polysiloxanes à modification poly(oxyalkylène).

6. Revêtement de peinture selon l'une quelconque des revendications précédentes, qui comprend en outre un ou plusieurs biocides.

7. Structure maritime comprenant sur au moins une partie de sa surface extérieure un revêtement de peinture selon l'une quelconque des revendications précédentes.

8. Structure selon la revendication 7, dans laquelle au moins une partie de la surface extérieure portant le revêtement le plus à l'extérieur est une partie submergée de ladite structure.

9. Composition de revêtement anti-salissures comprenant un système de liant à base de polysiloxane, ledit système de liant comprenant un ou plusieurs composant(s) de polysiloxane réactif(s) modifié(s) avec des fractions oligomères/polymères hydrophiles pendantes d'origine autre que le silicium, dans laquelle lesdites fractions oligomères/polymères hydrophiles sont liées au squelette polysiloxane au niveau d'une position non terminale, et lesdites fractions oligomères/polymères hydrophiles sont dépourvues de toute liaison qui peut être hydrolysée dans l'eau de mer, et dans lequel ledit polysiloxane réactif est un organopolysiloxane fonctionnel avec une fonctionnalité terminale.

10. Composition de revêtement selon la revendication 9, dans laquelle les fractions oligomères/polymères hydrophiles sont sélectionnées parmi la poly(vinyl pyrrolidone), le poly[N-(2-hydroxypropyl)méthacrylamide], le poly(acide acrylique), le poly(glycérol), le polyHEMA, les polysaccharides, le poly(alcool vinylique), les polycétones, le poly(aldéhyde guluronate), la polyvinylamine, le poly(acétate de vinyle), les poly(oxyalkylènes) tels que le poly (éthylène glycol), le poly(propylène glycol), la poly(2-méthyl-2-oxazoline), y compris les copolymères des composés précédents, en particulier les poly(oxyalkylènes).

11. Composition de revêtement selon la revendication 10, dans laquelle le poly(oxyalkylène) est sélectionné parmi le poly(oxyéthylène), le poly(oxypropylène) et le poly(oxyéthylène-co-oxypropylène).

12. Composition de revêtement selon l'une quelconque des revendications 9 à 11, qui comprend en outre un ou plusieurs biocides.

13. Utilisation d'un composant de polysiloxane réactif ayant des fractions oligomères/polymères hydrophiles pendantes d'origine autre que le silicium pour améliorer les propriétés anti-salissures d'une composition de revêtement à base de polysiloxane, dans laquelle lesdites fractions oligomères/polymères hydrophiles sont liées au squelette polysiloxane au niveau d'une position non terminale, et lesdites fractions oligomères/polymères hydrophiles étant dépourvues de toute liaison qui peut être hydrolysée dans l'eau de mer, et dans laquelle ledit polysiloxane réactif est un organopolysiloxane fonctionnel avec une fonctionnalité terminale.
